Europäisches Patentamt

European Patent Office

Office européen des brevets

(11) Publication number: **0 388 540**
**A1**

# EUROPEAN PATENT APPLICATION

(21) Application number: **89302752.4**

(22) Date of filing: **20.03.89**

(51) Int. Cl.⁵: **B62K 15/00**

(43) Date of publication of application:
**26.09.90 Bulletin 90/39**

(84) Designated Contracting States:
**BE CH ES FR IT LI NL SE**

(71) Applicant: **Tsai, Ching-Huang**
**446 Kienkwo First Rd**
**Sanmin District Kaohsiung(TW)**

(72) Inventor: **Tsai, Ching-Huang**
**446 Kienkwo First Rd**
**Sanmin District Kaohsiung(TW)**

(74) Representative: **Thomson, Roger Bruce et al**
**POLLAK MERCER & TENCH Eastcheap**
**House Central Approach**
**Letchworth Hertfordshire SG6 3DS(GB)**

(54) **Collapsible folding bicycle assembly.**

(57) A collapsible/folding bicycle construction has the mainframe mechanism (14a, 14b), handlebars (7) and foot pedals (24a, 24b) all collapsible. The mainframe mechanism comprises a front main frame (14a) and a rear main frame (14b) connected by means of a fastening means to make the mainframe mechanism foldable, thus allowing minimal space consumption and enabling easy transportation, handling and storage.

FIG . 1

EP 0 388 540 A1

## COLLAPSIBLE FOLDING BICYCLE ASSEMBLY

This invention relates to a new collapsible folding bicycle assembly.

Bicycles are one of the oldest and most economical means of transportation. The appearance of the bicycle may change from time to time, but there has been no revolutionary breakthrough in its basic structure. There must be a main frame, pedals, two wheels, etc. for a bicycle to function. Human energy (peddling) must be used to rotate the two wheels. Therefore, bicycles are also frequently used as an outdoor sports activity. More particularly in recent years, in addition to its traditional role of a kind of transportation vehicles, bicycle has become one of the hot outdoor sports means.

Although traditional bicycles are rather lightweight, owing to their bulkiness, they cannot be easily stored and transported. When they are carried, exported, and transported for a long distance, freight charges often represent a very high percentage of the relocation costs. The present invention overcomes some of these disadvantages. The invention contemplates a collapsible/folding bicycle that minimizes storage space, and enables transportation and handling to be easier and simpler.

The invention is a new design for a folding bicycle. To allow folding, some parts are hinged together. The main frame of the bicycle has several hinges at different folding points. The main frame has pivot connections with the handlebars, stem of the seat, and reinforcement rods, to permit the bicycle to be easily and quickly folded into a compact package. The specially designed main frame allows the folding-up operation become more easier and makes the structure more practical for a safety driving.

Figure 1 is an exploded view of a bicycle embodying the invention.

Figure 1-1 is a side elevational view of the Fig. 1 bicycle.

Figure 2 is a fragmentary view of a handlebar used in the Fig. 1 bicycle.

Figure 2-1 is a schematic drawing illustrating the structure of the locking ring of the handlebar.

Figure 2-2 is a schematic drawing illustrating the structure of the handlebar after folding.

Figure 3 is a side elevational view of the Fig. 1 bicycle after folding.

Figure 4 is a front perspective view of a foot pedal used in the Fig, 1 bicycle.

Figure 4-1 is a rear perspective view of the foot pedal in a folded condition.

Figure 5 is a schematic drawing illustrating the folding structure of an elongated main frame mechanism used in the Fig. 1 bicycle during folding process.

Figure 5-1 illustrates the structure of the retainer mechanism to connect the front main frame and the rear main frame of the elongated main frame mechanism of Fig. 5.

Fig. 6 shows the structure of the retainer means and the forked joint of the present invention;

Fig. 7 shows an alternatively sleeve for the sprocket shaft of the present invention;

Fig. 7-1 shows a folding condition according to Fig. 7; and

Fig. 7-2 shows the connection of the second U-shaped member to the rear main frame according to Fig. 7.

A bicycle constructed according to the present invention has a foldable structure to minimize storage space and to enable transportation and handling to be easier and simpler.

The US Patent No. 4,202,561 discloses a collapsible bicycle of which the folding structure of the handlebars and the main frame is quite different from the present invention. The US Patent Nos. 3,979,136 and 4,460, 192 are also related to a collapsible bicycle. However, in these cited patents, the operation of the bicycles disclosed is still not convenient, and more particularly after folding, the size of the bicycles is not minimized.

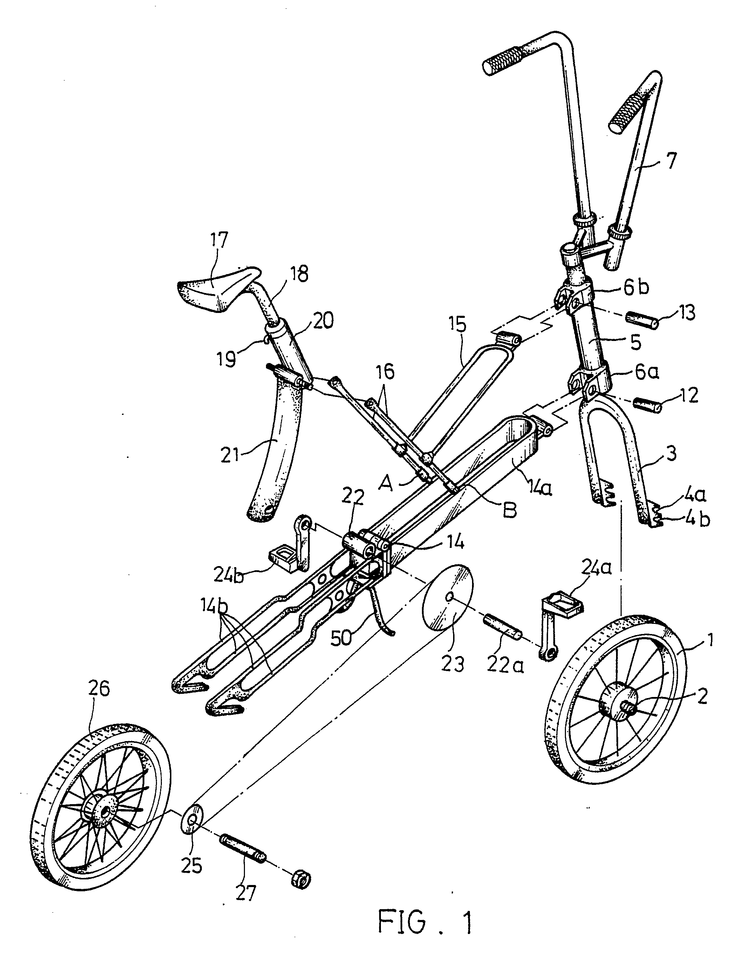

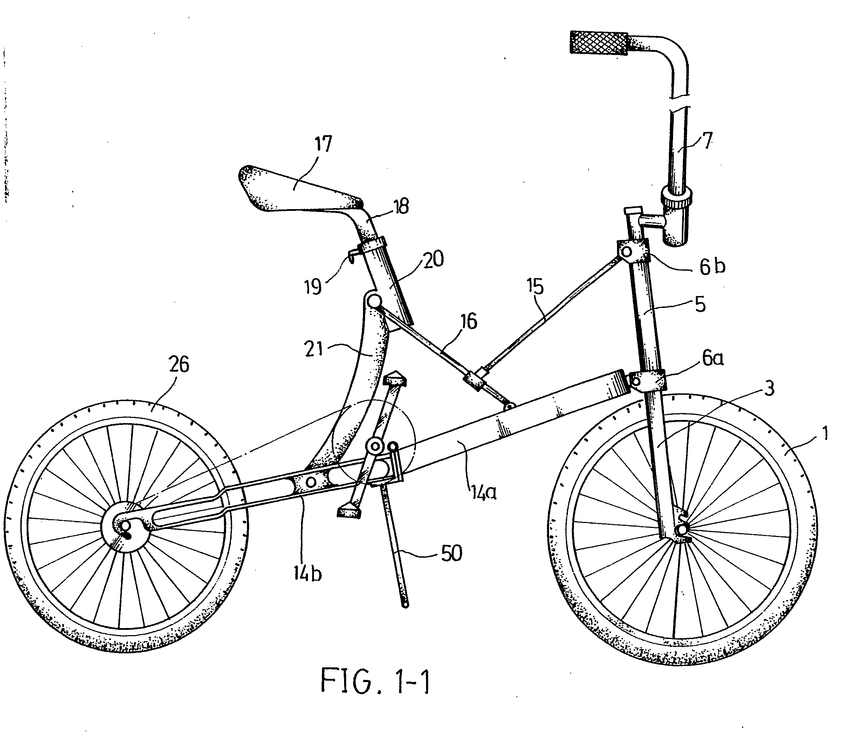

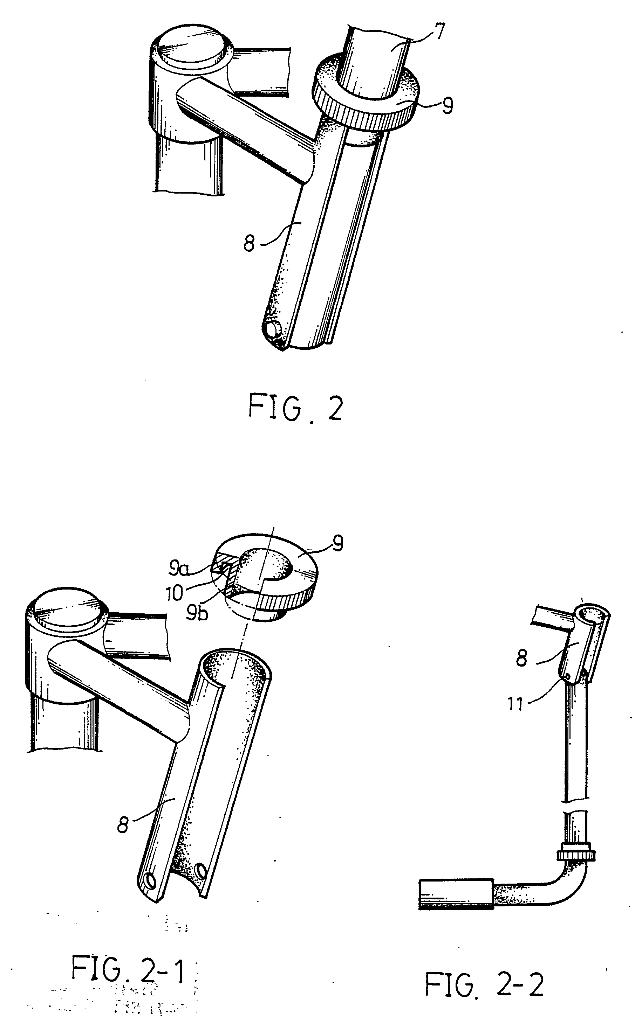

Figures 1 and 1-1 show a bicycle assembly in which a front wheel axle 2 of a front wheel 1 is used for mounting the front wheel onto a front fork 3, at slots 4A or slots 4B, depending on the outside diameter of the front wheel. An upper post portion of the front fork 3 extends through a goose neck tube 5 for connection to the handlebars 7. These are collapsible folding handlebars refer to Fig. 2 for structural details. Each handlebar 7 is inserted into a C- shaped clevis 8 and locked into position by a locking ring 9 (refer to Figure 2-1). Between the outer diameter 9A and inner diameter 9B of each locking ring, there is a machined groove 10. When assembling the locking ring 9 to the C-shaped clevis 8, the clevis 8 fits into this machined groove 10. When folding the handlebars refer to Fig. 2, each locking ring 9 is lifted to enable the handlebar 7 to come out of the C-shaped clevis 8 and fold downwards, using a connecting pin 11 as a swiveling point, to form into a collapsed structure as shown in Fig. 2-2.

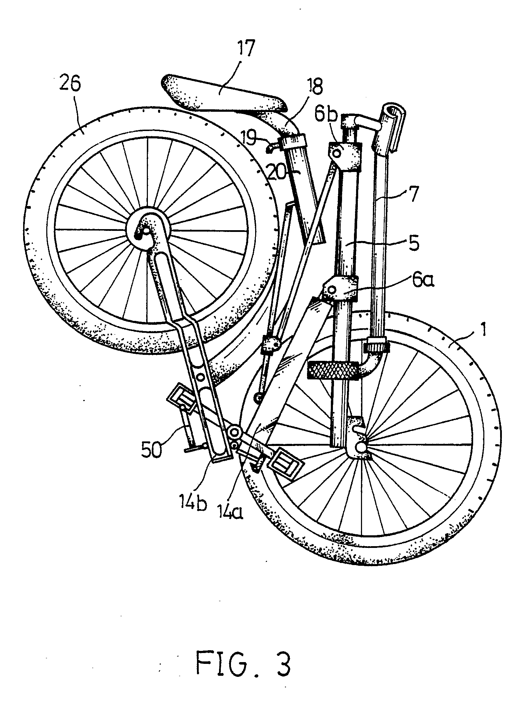

Referring again to Fig. 1, on the top and bottom ends of the goose neck tube 5 there are two clamps, i.e. a top clamp 6b and a bottom clamp 6a. The bottom clamp 6a has a locking pin 12 that pivotally connects the goose neck tube 5 to a front main frame 14a. The upper clamp 6b has an identical pin 13 that pivotably connects to the supporting arms 15. The other ends of these supporting arms 15 are pivotably joined to two seat reinforcement rods 16 to further connect to a seat 17. The seat 17 has a slanted seat stem 18 that is inserted into a pipe 20 thus enabling adjustment of the seat 17 to a desired height. The seat is locked into position by an adjusting knob 19. The whole seat assembly is supported by a main seat support bar 21 and the two seat reinforcement rods 16. The main seat support bar 21 and the two seat reinforcement rods 16 are pivotably connected to the front main frame 14a at points A and B. At the front of a rear main frame 14b is a sleeve 22 that supports a rotary sprocket shaft 22a. The front sprocket 23 and foot pedal assemblies 24a and 24b are all mounted onto this shaft. Parallel to the front sprocket is a rear sprocket 25 which is driven by the front sprocket 23 and is assembled to the rear wheel 26 and locked onto the rear end of the rear main frame 14b by the rear wheel axle 27. The front main frame 14a and the rear main frame 14b are pivotably connected together by means of an upper rotary shaft 14 and a bottom retainer means. A fork rod 50 is pivotably attached to the rear main frame 14b at the bottom for supporting the bicycle when it is stopped. When the fork rod 50 is bent downward to a vertical position for supporting the bicycle, the bottom retainer means is driven to break away from its position such that the front main frame 14a and the rear main frame 14b are released from the constraint of the bottom retainer means and become pivotable to fold up against the upper rotary shaft 14. The foot pedal assemblies 24a and 24b are also collapsible by folding up to a vertical position to minimize the storage space. The collapsed structure of the bicycle is as shown in Fig. 3.

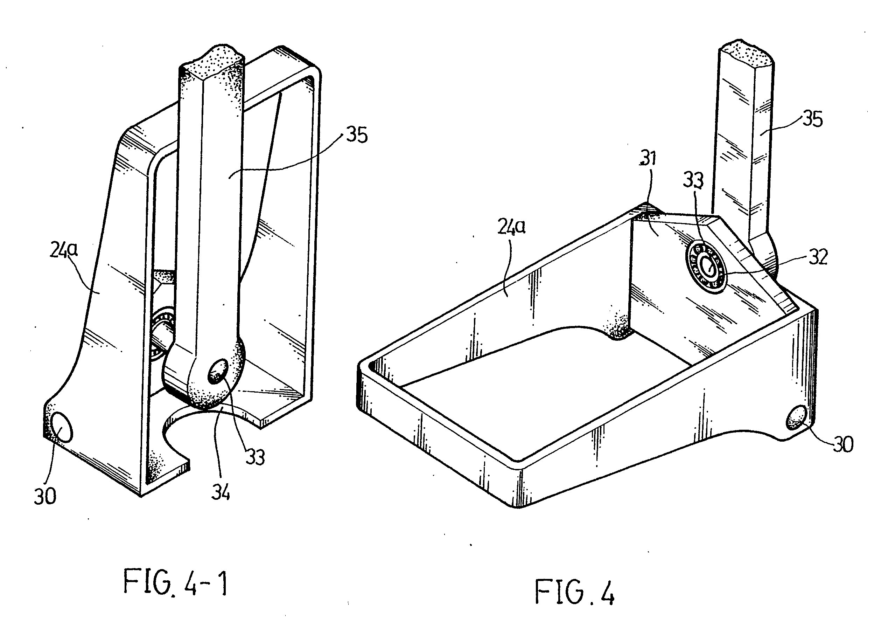

Figs 4 and 4-1 shown construction details of each foot pedal 24a or 24b. The foot pedal 24a is pivotably locked by a bolt 30 onto a vertical backing plate 31. This backing plate is connected to a crank 35 by a bearing 32 and a shaft 33. The backing plate 31 is allowed to rotate due to this bearing 32. Because the foot pedal 24a has a notch 34 and the bolt 30 forms a transverse swing axis such that the foot pedal 24a is allowed to fold upwards as shown in Fig. 4-1. The foot pedal 24a uses the backing plate 31 as a pendulum type support; the backing plate 31 relies on the connecting shaft 33 as a support point. Because this support point position of the shaft 33 is located at the upper end of backing plate 31 the backing plate has a relatively low center of gravity. Because the pedal has a "△" shaped configuration, it can always maintain a horizontal position, as in Fig. 4, and cannot flip over due to imbalance.

Please refer to Figs. 1 and 3 again for the collapsible structure of the main frame mechanism.

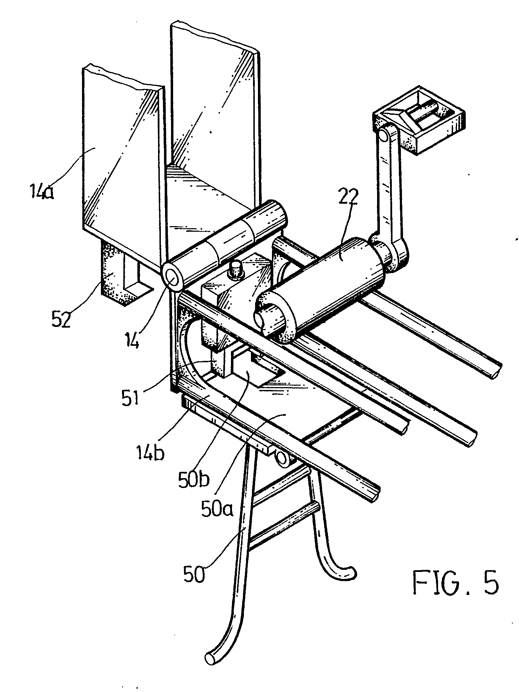

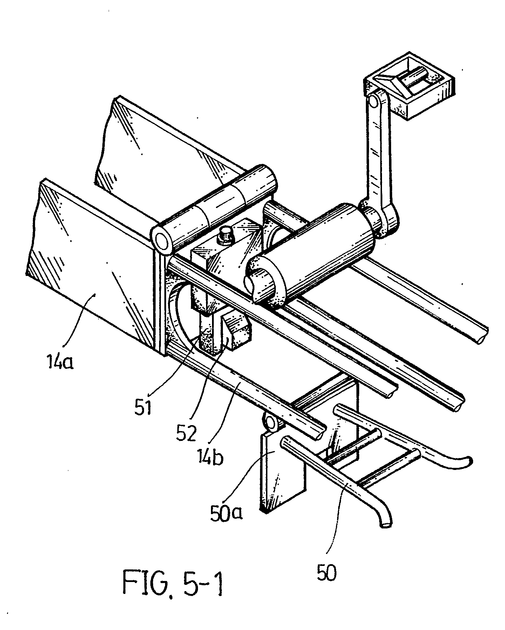

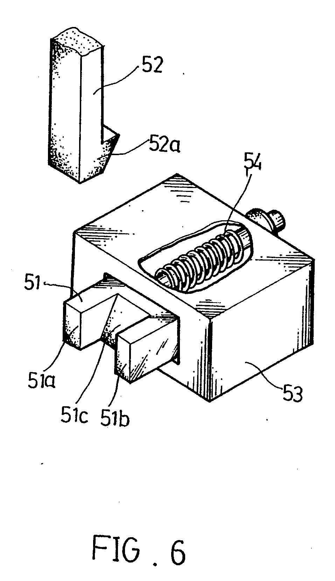

When in expanded condition as shown in Fig. 1, the front main frame 14a and the rear main frame 14b are coupled by means of the rotary shaft 14 and the bottom retainer means to form into a unitary main frame mechanism to properly function as in regular bicycle assemblies. Before attempting to fold the mechanism, it is first necessary to turn down the fork stand 50 into vertical position refer to Fig. 5 to let the horizontal top surface 50a of the fork stand 50 push a forked joint 51 upward. By means of pulling the handlebars backward to let the pulling force be applied on the front main frame 14a, the retainer means 52 which locks up with the forked joint 51 is thus driven to break away from the forked joint 51 along a notch 506 on the horizontal top surface 50a, such that the main frame mechanism becomes foldable. When to set the folded main frame mechanism into a working position, it is to press down the front main frame 14a to allow the retainer means 52 pass through the notch 50 b of the top surface 50a of the fork stand 50 and get into the right position for connection. As soon as the fork stand 50 is pulled up, the forked joint 51 is immediately driven to lock up with the retainer means 52 refer to Fig. 5-1. The retainer means 52 and the forked joint 50 form a fastening device to further match with the rotary shaft 14 to allow the front main frame 14a and the rear main frame 14b be coupled into a unitary main frame mechanism. Figure 6 shows the structure of the retainer means 52 and the forked joint 51. The forked joint is set in a casing 53 forced by a spring 54, of which the front fork end forms into two protruding blocks 51a and 51b to define a slot therebetween, with a slant 51c disposed at the bottom. The retainer means 52 is an elongated rod having a biased front end to form a hook rod 52a. When the retainer means 52 and the forked joint 51 are connected, the hook rod 52a of the retainer means 52 locks up with the slant 51c of the forked joint. By means of the push force from the spring 54, the hook rod 52a and the slant 51c are firmly retained together. When to fold up the main frame mechanism, the two protruding blocks 51a and 51b are pushed upward by the top surface 50a of the fork stand 50, such that the retainer means 52 breaks away from the slant 51c of the forked joint 51.

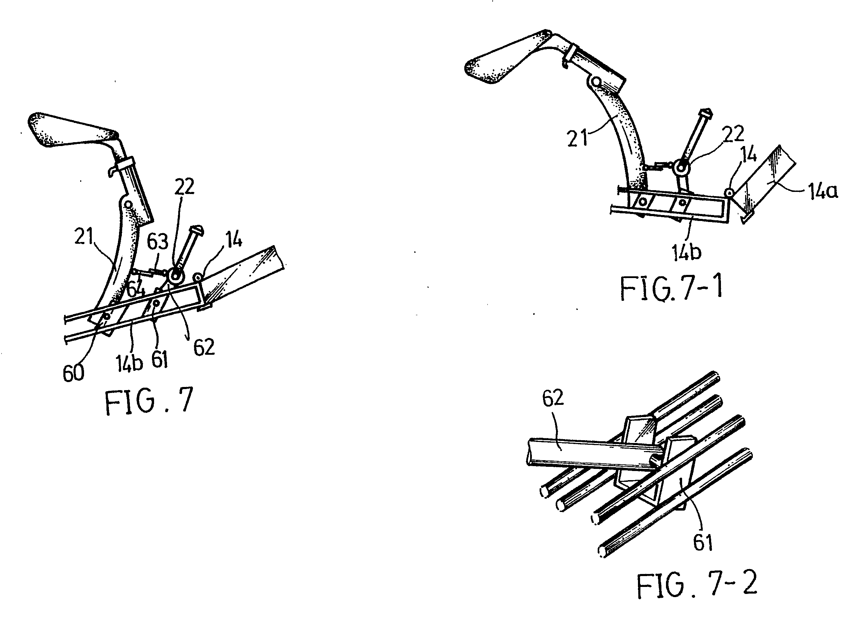

Now referring to Fig. 7, another embodiment of the present invention is shown. one end of the sleeve 22 of Fig. 1 is alternatively supported by a supporting member 62 pivoted to a first U-shaped member 61 two protruding blocks of which secured to the rear main frame 14b. Similarly, the other end of the sleeve 22 is pivoted to a first rod member 63 which is connected to second rod member 64 pivoted to the seat support bar 21.

Furthermore, the seat support bar 21 is similarly pivoted to a second U-shaped member 60 which is secured to the rear main frame 14b as shown in Fig. 7-2. According to the above arrangement, when the main frames 14a, 14b of the bicycle are extendedly stretched, the sleeve 22 will be stably located on the rear main frame 14b to assure the safety. While when the bicycle is folded up as shown in Fig. 7-1, because of the variation of the distance between the seat support bar 21 and front·main frame 14a, the sleeve 22 will be lifted upward to further reduce the volume of the folded up bicycle.

In general, the present invention is to provide such a collapsible folding bicycle assembly having numerous features, each tends to make the structure more practical and easy to be folded into a compact package to reduce the storage size.

## Claims

1. A folding bicycle comprising:
- a front steering assembly comprising a front tube 5, a front fork 3, and foldable handle bars 7, said front tube 5 being mounted on said front fork 3, said front fork 3 comprising bottom slots for mounting thereon of a front wheel 1, said front tube 5 comprising an upper clamp 6a and a bottom clamp 6b, said foldable handle bars 7 being mounted on said front tube 5, said foldable handle bars 7 each being inserted into a C-shaped clevis 8 and locked into position by a locking ring 9, said locking ring 9 being comprised of an outer diameter 9a and an inner diameter 9b with a machined groove 10 made therebetween, whereby, when assembling said locking ring 9 to said C-shaped clevis 8, said clevis 8 fits into said machined groove 10, and when folding said handlebars, said locking ring 9 being lifted to enable said handlebars 7 to come out of said C-shaped clevis 8 and fold downwards, using a connecting pin 11 as a swiveling point, to form into a collapsed structure;
- a front main frame 14a connected with bottom clamp 6a said front tube 5 at the front by means of a locking pin 12, comprising a retainer means 52 at the rear bottom end;
- a rear main frame 14b connected with said front main frame 14a at the front by means of rotary shaft 14, being mounted on a rear wheel at the back side, comprising a forked joint 51 at the front bottom end to match with said retainer means 52 of said front main frame 14a for fixation;
- a seat assembly comprised of a seat 17, a main seat support bar 21, two seat reinforcement rods 16, and front support arms 15, said seat assembly being supported by said main seat support bar 21, said mean seat support bar 21 being to support said seat assembly with one end and being pivotably connected to said front main frame 14a at a bearing point A, said two seat reinforcement rods 16 being to reinforce said main seat support bar 21 to support said seat 17 with the other ends of said two seat reinforcement rods 16 been pivotably connected to said front main frame 14a at a bearing point B, said supporting arms 15 being pivotably connected to said upper clamp 6b of said front tube 5 at one end and being pivotably joined to said two seat reinforcement rods 16 at the other end to further connect to said seat;
- a fork stand 50 comprising a horizontal top surface 50a, whereby when said fork stand 50 is vertically turned down, said top surface 50a forces said retainer means 52 of said rear main frame 14b to break away from said forked joint for proceeding with folding process;
-a foldable foot pedal assembly comprised of two foldable foot pedals 24a and 24b, a sleeve 22 and a rotary sprocket shaft 22a, said sleeve 22 being fixed mounted onto the top surface of said rear main frame 14b at a suitable position, said rotary sprocket shaft 22a being inserted through said sleeve 22 to connect said two foldable foot pedals 24a and 24b onto said rotary sprocket shaft 22a.

2. The folding bicycle of claim 1 wherein said forked joint 51 of said rear main frame 14b is set in a casing 53 and forced by a spring 54, comprising a front fork end to form into two protruding blocks 51a and 51b to define a slot 5 therebetween, with a slant 51c disposed at the bottom; said retainer means 52 of said front main frame 14a being an elongated rod having a biased front end to form a hook rod 52a to match with said slang 51c for connection.

3. The folding bicycle of claim 1 wherein said foldable foot pedals each comprise a bolt 30, a backing plate 31, a pedal 24a or 24b, and a crank 35, said pedal 24a or 24b being pivotably locked by said bolt 30 onto said backing plate 31, said backing plate 31 being connected to said crank 35 by a bearing 32 and a shaft 33, said pedal 24a or 24b comprising a notch 34 to permit said pedal 24a or 24b to fold upwards along the axial direction of said bolt 30.

4. The folding bicycle of claim 1 wherein the connection of said sleeve to the rear main frame employs a retractable connection structure including a supporting member 62 supporting said sleeve 22, and a first U-shaped member 61 pivoted thereto and secured to said rear main frame, and a first rod member 63 pivoted to said sleeve 22 , a second rod member 64 connected to said first rod member 63 and pivoted to said seat support bar 21, and a second U-shaped member 60 pivoted to said seat support bar 21 and secured to said rear main frame whereby when the bicycle is extendedly stretched, said sleeve 22 is just stably located on said rear main frame 14b, while when the bicycle is folded up, said sleeve 22 is lifted upward to further reduce the volume of the folded up bicycle.

5. The folding bicycle of claim 1, wherein said sleeve 2 is directly secured to said rear main frame.

6. The folding bicycle of claim 3 wherein said backing plate 31 has a "⌂" shaped configuration, said bolt 30 being transversely inserted into said backing plate 31 above the center of gravity to let the associated pedal be always maintained at a horizontal position.

FIG . 1

FIG. 1-1

EP 0 388 540 A1

FIG. 2

FIG. 2-1

FIG. 2-2

FIG. 3

FIG. 4

FIG. 4-1

FIG. 5

FIG. 5-1

FIG . 6

EP 0 388 540 A1

FIG.7

FIG.7-1

14b

FIG.7-2

EP 0 388 540 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 142 321 (AMERICAN BICYCLE CO. INC.)<br>* Abstract; figures * | 1-3,6 | B 62 K 15/00 |
| A,D | US-A-3 979 136 (A. LASSIERE)<br>* Abstract; figures * | 1-3,6 | |
| A | FR-A-1 449 674 (T.I. (GROUP SERVICES) LTD)<br>* Figures * | 1,2 | |
| A | GB-A- 952 887 (ETABLISSEMENT VALERCA)<br>* Figures * | 1 | |

TECHNICAL FIELDS SEARCHED (Int. Cl.5)

B 62 K

The present search report has been drawn up for all claims

| Place of search | Date of completion of the search | Examiner |
|---|---|---|
| THE HAGUE | 16-11-1989 | FRANKS B.G. |